# EUROPÄISCHE PATENTSCHRIFT

(11) **EP 3 537 183 B1**
(45) Veröffentlichungstag und Bekanntmachung des Hinweises auf die Patenterteilung: **17.07.2024**
(21) Anmeldenummer: 19159985.1
(22) Anmeldetag: 28.02.2019
(51) Int. Cl.: G01T 3/00, H01J 47/12

(54) **DETEKTOR SOWIE VERFAHREN ZUM NACHWEIS VON NEUTRONEN**
DETECTOR AND METHOD FOR DETECTING NEUTRONS
DÉTECTEUR AINSI QUE PROCÉDÉ DE DÉTECTION DES NEUTRONS

(30) Priorität: 05.03.2018 DE 102018105026
(43) Veröffentlichungstag der Anmeldung: 11.09.2019
(73) Patentinhaber: Photonis Germany GmbH, 64625 Bensheim (DE)
(72) Erfinder: Merle, Oliver, 36304 Alsfeld (DE)
(74) Vertreter: Stoffregen, Hans-Herbert

(56) Entgegenhaltungen:
- EP-A1- 1 202 322
- US-A1- 2010 123 085

## Beschreibung

Die Erfindung bezieht sich auf einen Detektor zum Nachweis von Neutronen umfassend:
- ein zumindest bereichsweise mit einem Gas gefülltes Gehäuse,
- zumindest ein in dem Gehäuse angeordnetes Bor-10 enthaltendes und Durchgänge aufweisendes Konverterelement, welches Konvertierungsprodukte, wie Ionen, aufgrund einer Absorption der zu detektierenden Neutronen erzeugt, wobei die Konvertierungsprodukte Elektronen in dem Gas erzeugen,
- zumindest eine Ausleseeinrichtung zum Nachweis der Elektronen.

Auch nimmt die Erfindung Bezug auf die Verwendung eines Konverterelements für einen mit Gas befüllten Detektor zum Nachweis von Neutronen aus einem Bor-10 enthaltenden und Durchgänge aufweisenden Material.

Die Erfindung bezieht sich ferner auf ein Verfahren zum Nachweis von Neutronen, umfassend die Verfahrensschritte:
- Auffangen der zu detektierenden Neutronen mit zumindest einem Konverterelement, welches bei Absorption der Neutronen Konvertierungsprodukte, wie Ionen, erzeugt;
- Erzeugung von Elektronen in einem Gas durch die Konvertierungsprodukte;
- Ableiten der Elektronen in einem elektrischen Driftfeld zu einer Ausleseeinrichtung, wobei die Elektronen zumindest teilweise durch das Konverterelement durchgeleitet werden, insbesondere durch eine Vielzahl vorzugsweise matrixartig angeordneter Durchgänge des Konverterelementes;
- Nachweis der Elektronen in einer Ausleseeinrichtung.

Ein Verfahren und ein Detektor mit Konverterelement der eingangs genannten Art ist in der EP 1 202 322 A1 beschrieben. Der Detektor umfasst eine Konvertereinrichtung in Form eines mikrostrukturierten Gasdetektors. Bei diesen Detektoren wird der Verstärkungseffekt über Gasentladungen erreicht, ähnlich wie in einem Geiger-Müller-Zählrohr. Um eine lokale Gasentladung zu erzeugen, wird lokal eine hohe Feldstärke erzeugt.

Ein Ansatz ist die Verwendung sog. GEM-Folien (Gas-Electron-Multiplier-Foils). Diese sind "gelocht", also mikrostrukturiert, und an zwei Seiten metallisiert. Bei Anlegen einer Hochspannung entsteht in den Löchern lokal eine sehr hohe Feldstärke. Ladungen werden dort stark beschleunigt und führen so zur Ionisation des Gases, was eine Elektronenvervielfachung bewirkt.

Um eine hohe Nachweiseffizienz zu erreichen, werden eine Vielzahl hintereinander gelagerter Konverterschichten benötigt. Dies führt zu einer Anordnung mit vielen GEM-Folien, welche eine verhältnismäßig geringe Ortsauflösung liefert.

Effiziente Detektoren mit Festkörperkonvertern benötigen z.B. mehrere getrennte Lagen von hinreichend dünnen Konverterschichten. Sind die Lagen zu dick, so werden in der Tiefe zwar Neutronen reagieren, die Reaktionsprodukte verlassen die Schicht jedoch nicht und können so nicht nachgewiesen werden. Da die Neutronen trotzdem absorbiert wurden, können diese auch nicht mehr in nachgelagerten Schichten detektiert werden (Abschattungseffekt). Daher gibt es eine vom Material abhängige optimale Schichtdicke. Eine weitere Steigerung kann nur durch hintereinander gelagerte, alternierende Strukturen aus Konverter und Nachweismedium erfolgen. In manchen Reaktionen entstehen zwei Ionen, welche in entgegengesetzter Richtung emittiert werden. Dabei reicht es dann auch aus, wenn nur eine Seite der Schicht an das lonen-Nachweismedium angrenzt. Genutzt wird dieses Prinzip z.B. bei Borbeschichteten Gaszählrohren ("Boron-lined straws").

Mikrostrukturierte Gasdetektoren wurden in der Vergangenheit auch schon mit dickeren Strukturen gebaut, auch solchen aus 1 mm dicken Mikrokapillarplatten, aber ohne halbleitende Eigenschaften, wie dies in der EP 2 266 129 B1 beschrieben ist. Diese Platten wurden oben und unten metallisiert, die Löcher aber ausgespart. Es wurde bereits mehrfach gezeigt, dass damit auch Gas-Elektronen-Vervielfacher aufgebaut werden können. Oft werden solche Konzepte als "Thick GEM" (ThGEM) bezeichnet. Als Material wird ein isolierender Kunststoff verwendet.

Obige Detektoren können nicht im Vakuum betrieben werden, sondern benötigen ein Gas zur korrekten Funktion. Dieses Gas kann z.B. eine Edelgas/Methan-Mischung bei einem Druck von einer Atmosphäre sein.

Eine weitere Möglichkeit ist die Nutzung von mikrostrukturierten Konvertern. Dies führt bei passender Ausführung zu einer großen Oberfläche und relativ dünnen Schichten. Da die Richtung der emittierten Ionen jedoch isotrop verteilt ist, gelangen auch hier nicht alle Ionen aus der Mikrostruktur in das Nachweismedium.

Besonders effektiv lassen sich mikrostrukturierte Konverter dann einsetzen, wenn die emittierten Ionen direkt in den Nachweisbereich gelangen.

Ein Beispiel für einen solchen Konverter sind Bor oder Gd-dotierte Mikrokanalplatten (MCP Micro-Channel-Plate), die z. B. in der US 2010/0123085 A1 offenbart sind. Das Material zwischen den Poren solcher Platten ist nur wenige µm stark, so dass dort emittierte Ionen direkt in die Kanäle gelangen können. Die Kanäle von Mikrokanalplatten sind Sekundärelektronenvervielfacher. Ionen lösen Sekundärelektronen aus der Kanalwand und starten durch weitere Emission von Sekundärelektronen einen Lawinenverstärkungseffekt. Somit gelangt praktisch fast jedes bei einem Neutroneneinfang konvertierte Ion in ein Nachweismedium. Gleichzeitig sind die Kanalwände zwar nur wenige µm dünn, aber dafür recht lang (L > 500 µm). Damit wird relativ viel Material dem Neutronenstrahl exponiert, was zu einer hohen Neutronenabsorption im Material führt. Gleichzeitig können die Ionen seitwärts fast immer in ein Nachweismedium gelangen.

Mikrokanalplatten werden seit vielen Jahrzehnten für Nachtsichtbildverstärker eingesetzt. Sie erreichen die hohe Verstärkung durch Sekundärelektronenvervielfachung, wobei die Elektronen aus dem Halbleitermaterial der Kanalwände gelöst werden. Damit dieser Prozess ablaufen kann, ohne dass die Mikrokanalplatte Schaden nimmt, muss sie in einem Hochvakuum bis Ultrahochvakuum betrieben werden. Die Empfindlichkeit gegenüber Restgas macht die Konstruktion entsprechender Detektoren teuer und aufwendig.

Gleichzeitig entsteht bei der Bor-Einfangreaktion Alphastrahlung. Hohe Neutronenraten führen entsprechend zu einer Ansammlung von Helium im Volumen. Wird das Volumen kontinuierlich durch Vakuumpumpen evakuiert, so wird das Helium aus dem Gasraum entfernt. Dies bedeutet aber ein aufwendiges Setup mit teuren Pumpen, welche ständig aktiv sein müssen. In versiegelten Röhren (Bildverstärker) kann die Heliumfreisetzung langfristig zu Problemen führen, nämlich dann, wenn der Heliumpartialdruck die kritische Grenze für den Betrieb von MCPs übersteigt.

In der US 2010/0123085 A1 wird vorgeschlagen, Mikrokanalplatten dahingehend zu modifizieren, dass ihr Glas mit einem Neutronenkonverter dotiert wird (z.B. Bor-10 oder Gd) - also Isotopen, die einen hohen Einfangquerschnitt für kalte und thermische (also langsame) Neutronen aufweisen. Bei Neutroneneinfang wird eine Kernreaktion im Glas ausgelöst, welche dazu führt, dass Ionen bis in die Kanäle gelangen können und dort Elektronen aus der Kanalwand reißen. Diese Elektronen erzeugen dann über die beschriebene Sekundärelektronenemission eine Lawinenentladung, wie sie für MCPs üblich ist. Zugrunde liegt die Sekundärelektronenemission an der Kanalwand.

Dotierte MCPs weisen eine sehr hohe Nachweiseffizienz im Vergleich zu soliden Schichten aus Bor-10 und ähnlichen Isotopen auf. Der Grund liegt darin, dass die bei der Kernreaktion entstehenden Ionen nur eine begrenzte Reichweite im Festkörper haben. Ist die Schicht dicker, können sie nicht mehr nachgewiesen werden. Die Mikrostruktur der MCP bietet aber sehr geringe Distanzen zu den Kanälen, und eine höhere Dicke in Richtung der Oberflächennormale der Platte. Das führt dazu, dass auch tiefer in die MCP eindringende Neutronen noch detektierbar sind, da die Reaktionsprodukte seitwärts immer einen kurzen Weg haben.

Allerdings haben MCPs den Nachteil, dass sie als Vakuumdetektoren nur aufwendig und teuer herstellbar sind. Auch ist es extrem schwer großflächige Detektoren zu bauen, da die entsprechenden vakuumdichten Kammern oder Gehäuse immer größer werden. Auch treten als Reaktionsprodukte bei den Kernreaktionen z.B. Alpha-Teilchen auf, welche nichts weiter als Helium Kerne sind. In nicht gepumpten Systemen kann es daher zu Anreicherung von Helium im Vakuum kommen.

Davon ausgehend liegt der Erfindung die Aufgabe zu Grunde, ein Verfahren und einen Detektor zum Nachweis elektrisch neutraler Teilchen der eingangs genannten Art derart weiterzubilden, dass die Nachweiseffizienz gegenüber GEM-Detektoren verbessert und der Fertigungsprozess gegenüber MCP-Detektoren vereinfacht wird.

Die Aufgabe wird gemäß der Erfindung u.a. im Wesentlichen dadurch gelöst, dass der Detektor das zumindest eine Konverterelement in Form einer Platte aus Borosilikat-Glas aufweist, das mit Bor-10 angereichert ist.

Die Erfindung zeichnet sich dadurch aus, dass der Detektor das zumindest eine Konverterelement in Form einer Platte aus Borosilikat-Glas aufweist, das mit Bor-10 angereichert ist. Die Konvertierung findet bei dem erfindungsgemäßen Detektortyp in dem Bulkmaterial statt und nicht, wie im Stand der Technik, in den Schichten. Daher wird vorzugsweise nur eine Platte benötigt, deren Rückseite aus der Nähe und damit mit hoher Ortsauflösung ausgelesen werden kann.

Vorzugsweise ist die Anreicherung des Bor-10 im Boroxid des Borosilikat-Glases größer 50 %, vorzugsweise größer 75 %, besonders bevorzugt größer 90 %.

Die Platte hat vorzugsweise eine Dicke D im Bereich 500µm < D < 20mm.

Eine besonders bevorzugte Ausführungsform zeichnet sich dadurch aus, dass die Platte eine Mikrokapillarplatte ist mit Mustern aus Millionen durchgehender Kapillaren mit einem Durchmesser von vorzugsweise zwischen 30µm und 800 µm, insbesondere < 150µm.

Vorzugsweise weist eine Oberseite und eine Unterseite der Mikrokapillarplatte jeweils eine Metallisierung auf, an die zumindest eine Driftfelderzeugungseinrichtung in Form einer Hochspannung angeschlossen ist, mittels der ein elektrisches Driftfeld derart erzeugbar ist, dass dieses die Durchgangsöffnungen in Form der Kapillaren der Mikrokapillarplatte durchsetzt und elektrisch geladene Teilchen zumindest teilweise durch die Kapillaren zu der Ausleseeinrichtung driften.

Die Durchgangsöffnungen in Form der Kapillaren müssen keine leitfähige Beschichtung aufweisen.

Der Detektor kann ein einziges Konverterelement in Form der Mikrokapillarplatte aus Borosilikat-Glas aufweisen, das mit Bor-10 angereichert ist. Sollte die Verstärkung nicht ausreichen, können auch mehrere Platten in dem Konverter enthalten sein.

Das zumindest eine Konverterelement ist in Form der Mikrokapillarplatte in einem geschlossenen, mit Gas gefüllten Volumen bei etwa 1atm angeordnet.

Das Borsilikat-Glas umfasst gemäß eine bevorzugten Ausführungsform in Gew.-%:

| | | |
|---|---|---|
| 70 -80 % | SiO₂, | vorzugsweise 74,4%, |
| 7-13% | ¹⁰B₂O₃, | vorzugsweise 9,5%, |
| 0,5-8% | Al₂O₃, | vorzugsweise 5,5%, |
| 0,5-12% | Na₂O, | vorzugsweise 6,6%, |
| 0,3-10% | K₂O, | vorzugsweise 0,6%, |
| 0,5-2% | CaO, | vorzugsweise 0,9%, |
| 1-4% | BaO, | vorzugsweise 2,2%. |

Alternativ kann das Borsilikat-Glas umfassen in Gew.-%:

| | |
|---|---|
| SiO₂ | 55,5% |
| ¹⁰B₂O₃ | 12,5% |
| Al₂O₃ | 0,5% |
| Na₂O | 1,5% |
| K₂O | 10% |
| CaO | 5% |
| V₂O₅ | 0,5% |
| Fe₂O₃ | 12% |
| TiO₂ | 2,5% |

Die Ausleseeinrichtung kann als eine Delay-Line-, eine Multipad- oder eine "Wedge and Strip"-Struktur ausgebildet sein, die kapazitiv durch eine Rückwand an die Mikrokapillarplatte gekoppelt ist. Alternativ kann die Ausleseeinrichtung einen Phosphorschirm aufweisen. Ferner ist vorgesehen, dass die Ausleseeinrichtung hinter der Mikrokapillarplatte mit einer resistiven Schicht aus vorzugsweise Germanium oder Kohlenstoff versehen ist.

Vorzugsweise wird als Gas eine Mischung von Argon mit einer oder mehreren der Komponenten CO₂ (10-90% Anteil), Dimethylether, Isobutan und CH₄ verwendet.

Der B₂O₃-Anteil des Borsilikat-Glases bei der Fertigung des Glases ist vorzugsweise in der Schmelze durch angereichertes ¹⁰B₂O₃ ersetzt.

Ferner bezieht sich die Erfindung auf die Verwendung eines Konverterelements für einen mit Gas befüllten Detektor zum Nachweis von Neutronen, aus einem Bor-10 enthaltenden und Durchgänge aufweisenden Material, wobei das Konverterelement in Form einer Platte aus Borosilikat-Glas ausgebildet ist, das mit Bor-10 angereichert ist.

Ein weiterer Aspekt der beanspruchten Erfindung bezieht sich auf ein Verfahren zum Nachweis von Neutronen, umfassend die Verfahrensschritte:
- Auffangen der zu detektierenden Neutronen mit zumindest einem Konverterelement, welches bei Absorption der Neutronen Konvertierungsprodukte, wie Ionen, erzeugt;
- Erzeugung von Elektronen in einem Gas durch die Konvertierungsprodukte;
- Ableiten der Elektronen in einem elektrischen Driftfeld zu einer Ausleseeinrichtung, wobei die Elektronen zumindest teilweise durch das Konverterelement durchgeleitet werden, insbesondere durch eine Vielzahl vorzugsweise matrixartig angeordneter Durchgänge des Konverterelementes;
- Nachweis der Elektronen in einer Ausleseeinrichtung.

Ein solches Verfahren zeichnet sich dadurch aus, dass als Konverterelement eine Platte aus Borosilikat-Glas verwendet wird, das mit Bor-10 angereichert ist, wobei die zu detektierenden Neutronen eine Kernreaktion in dem Glas auslösen und wobei die entstehenden Konvertierungsprodukte in den als Kapillaren ausgebildeten Durchgängen Gasentladungen triggern.

Gegenüber Cascade-ähnlichen Detektoren wird der Vorteil erreicht, dass die Nachweiseffizienz deutlich verbessert ist und dass das Nachweisvolumen räumlich auf eine Platte begrenzt ist, von welcher nur eine Seite ausgelesen werden muss. Das erlaubt das Anbringen von Delay-Line-Auslesern, Multipad-Auslesern oder Phosphorschirmen in nächster Nähe zum Verstärker. Letzteres führt zu einer verbesserten Ortsauflösung im Vergleich zu Mehrschicht-Systemen, wie Cascade, welche die Auflösung für eine hohe Effizienz opfern müssen. Letzterer Kompromiss wurde durch das neue Konzept aufgeweicht. Der gekapselte Detektor gemäß der Erfindung muss nicht aktiv mit Gas gespült werden.

Zudem bietet ein mikrostrukturierter Konverter gemäß der Erfindung eine deutlich bessere Nachweiseffizienz als ein ThickGEM-Detektor mit einer Bor-10 Schicht an der Eingangsseite.

Die Erfindung zeichnet sich auch aus durch die Verwendung eines Konverterelements für einen mit Gas befüllten Detektor zum Nachweis von Neutronen, aus einem Bor-10 enthaltenden und Durchgänge aufweisenden Material, wobei das Konverterelement in Form einer Platte aus Borosilikat-Glas ausgebildet ist, das mit Bor-10 angereichert ist.

Im Vergleich zu MCP- basierten Systemen wird kein Hochvakuum für den Betrieb benötigt. Die Detektion erfolgt im Gasraum. Damit ist das bei UHV-Neutronendetektoren existierende Problem des He-Aufbaus neutralisiert. Durch Neutroneneinfang freigesetztes Helium stört den Betrieb praktisch nicht. Gleichzeitig können die erfindungsgemäßen Detektoren ohne aktiven Gasdurchfluss gebaut werden, also als geschlossene Detektoren.

Ferner sind die Fertigungsprozesse für Gasdetektoren deutlich günstiger als die für MCP Detektoren, was maßgeblich an den durch die Vakuumtechnik implizierten Randbedingungen liegt.

Weitere Einzelheiten, Vorteile und Merkmale der Erfindung ergeben sich nicht nur aus den Ansprüchen, den diesen zu entnehmenden Merkmalen - für sich und/oder in Kombination - sondern auch aus der nachfolgenden Beschreibung eines den Figuren zu entnehmenden Ausführungsbeispiels.

Es zeigen:
- Fig. 1: eine Mikrokapillarplatte,
- Fig. 2: ein Konverterelement in Form einer Mikrokapillarplatte aus Borosilikat-Glas, angereichert mit Neutronenkonvertern, wie Bor-10, und
- Fig. 3: einen Detektor mit Konverterelement.

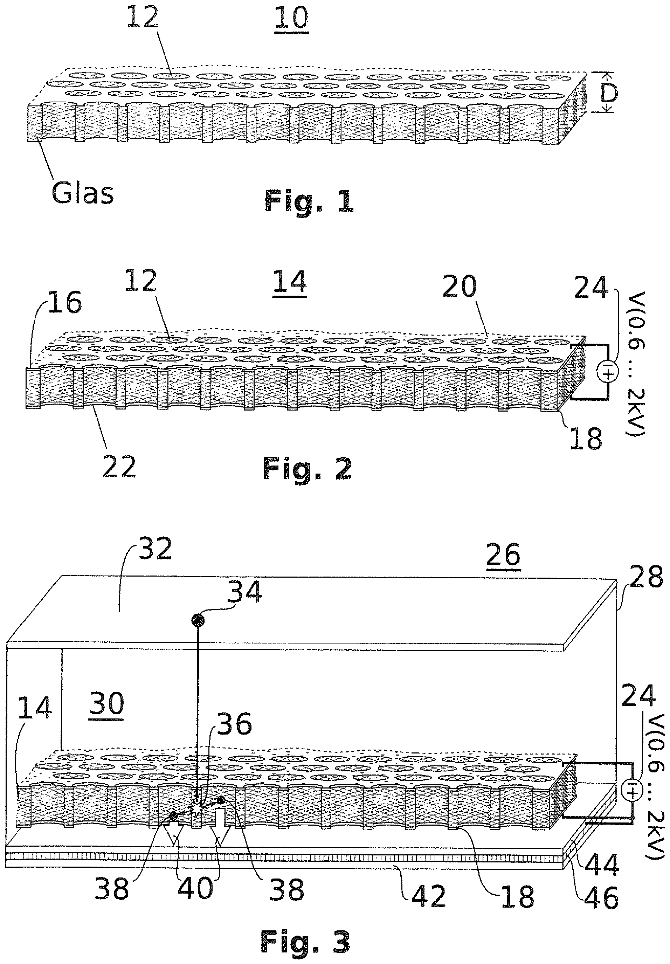

Fig.1 zeigt eine Mikrokapillarplatte 10 in Form einer dünnen Platte aus Borosilikat-Glas. Die Mikrokapillarplatte 10 weist eine Mikrostruktur aus Millionen kleiner Durchgangsöffnungen 12 wie Kapillaren bzw. Poren mit einem Durchmesser von < 150 µm auf. Die Dicke D der Platte 10 liegt im Bereich 500µm < D < 20mm. Nach der Erfindung besteht die Mikrokapillarplatte 10 aus einem Borosilikat-Glas, welches mit Bor-10 angereichert ist. Dabei wird in der Glasschmelze Bor-10 angereichertes Boroxid verwendet, wobei bei der Fertigung das normale B2O3 durch angereichertes Bor-10 nahezu vollständig ersetzt wird. Letzteres ist dann keine dotierte Platte mehr, sondern das Isotop ist ein Hauptbestandteil des Grundmaterials. Dementsprechend hoch ist die Einfangwahrscheinlichkeit für Neutronen. Die Verwendung einer dicken Mikrostruktur aus Material mit hohem Neutroneneinfangquerschnitt im Bulk ist gegenüber dem Stand der Technik neu.

Fig. 2 zeigt einen Konverter 14, wobei die Mikrokapillarplatte 10 an ihrer Oberseite 16 und ihrer Unterseite 18 mit jeweils einer Metallisierung 20, 22 versehen ist. Die Metallisierungen 20, 22 weisen im Bereich der Kapillaren 12 Durchbrechungen auf. Durch Kontaktieren einer Hochspannungsquelle 24 an die aufgebrachten Metallisierungen 20, 22 kann sich ein elektrisches Feld in den Kapillaren 12 ausbilden.

Ein Beispiel für eine Ausprägung eines Detektors 26 ist in Fig. 3 gezeigt. Der Konverter 14 in Form einer "ThickGEM" aus angereichertem Borosilikat-Glas ist in einem abgeschlossenen Gehäuse 28 mit Zählgas 30 bei etwa 1 atm (≈ 0,1 MPa) angeordnet. Ein Eingangsfenster 32 besteht aus einem für Neutronen gut durchlässigen Material, z.B. Aluminium.

Der Konverter 14 ist unter Hochspannung. Eintreffende Neutronen 34 erzeugen in dem Glas 10 Kernreaktionen 36 mit den angereicherten Isotopen, z.B. Bor-10. Die Reaktionsprodukte 38 gelangen in die Kapillaren 12 und ionisieren da das Zählgas 30. Bei einer Gasionisation entsteht in den Kapillaren 12 eine Gasentladung 40, welche in Richtung der hochohmigen Schicht 44 beschleunigt und dann als elektrischer Puls kapazitiv mittels einer Ausleseelektronik 42, die parallel zur Unterseite 18 angeordnet ist, ausgelesen wird.

Die Verstärkung entsteht durch die Gasentladung in den Kapillaren 12 des Konverters 14. Diese wird durch die aus der Platte 10 in die Kapillaren 12 austretenden Ionen ausgelöst und durch die Kapillarwände räumlich eingeschränkt. Dadurch ergibt sich eine hohe Ortsauflösung. Die übliche Zeitauflösung von Gasdetektoren liegt im ns-Bereich, was für Neutronenflugzeitmessungen ausreichend ist.

Um Aufladungen zu verhindern, ist eine hochohmige Schicht 44 im Inneren des Detektors 26 unter dem Konverter 14 vorzugsweise mit einem geringen Abstand zur Metallisierung 18. Parallel zu der hochohmigen Schicht 44 ist ein Isolator 46 angeordnet, welcher gleichzeitig eine rückseitige Begrenzung des Gasraums 28 ist. Dies kann ein PCB oder eine Keramik sein. Außen wird die vorzugsweise kapazitive Auslesestruktur 42 angekoppelt. Alternativ sind auch durchkontaktierte Pads möglich.

Neben der skizzierten Auslesestruktur sind auch alle anderen aus dem Bereich ThickGEM bekannten Auslesesysteme denkbar. Auch können in dem Konverter mehrere Konverter 14 enthalten sein, falls die Verstärkung mit einem Konverter 14 allein nicht erreicht wird.

## Patentansprüche

1. Detektor (26) zum Nachweis von Neutronen, umfassend:
- ein zumindest bereichsweise mit einem Gas gefülltes Gehäuse (28),
- zumindest ein in dem Gehäuse angeordnetes Bor-10 enthaltendes und Durchgänge aufweisendes Konverterelement (10), welches Konvertierungsprodukte, wie Ionen, aufgrund einer Absorption der zu detektierenden Neutronen erzeugt, wobei die Konvertierungsprodukte Elektronen in dem Gas erzeugen,
- zumindest eine Ausleseeinrichtung zum Nachweis der Elektronen,
**dadurch gekennzeichnet,**
**dass** der Detektor das zumindest eine Konverterelement in Form einer Platte (10) aus Borosilikat-Glas aufweist, das mit Bor-10 angereichert ist.

2. Detektor nach Anspruch 1,
**dadurch gekennzeichnet,**
**dass** die Anreicherung des Bor-10 im Boroxid des Borosilikat-Glases größer 50 %, vorzugsweise größer 75 %, besonders bevorzugt größer 90 %, ist.

3. Detektor nach Anspruch 1 oder 2,
**dadurch gekennzeichnet,**
**dass** die Platte (10) eine Dicke D im Bereich 500µm < D < 20mm aufweist und/oder dass die Platte eine Mikrokapillarplatte ist mit Mustern aus Millionen durchgehender Kapillaren (12) mit einem Durchmesser zwischen 30 µm und 800 µm, vorzugsweise von < 150µm.

4. Detektor nach Anspruch 3,
**dadurch gekennzeichnet,**
**dass** eine Oberseite (16) und eine Unterseite (18) der Mikrokapillarplatte (10) jeweils eine Metallisierung (20, 22) aufweisen, an die zumindest eine Driftfelderzeugungseinrichtung in Form einer Hochspannung angeschlossen ist, mittels der ein elektrisches Driftfeld derart erzeugbar ist, dass dieses die Durchgangsöffnungen in Form der Kapillaren (12) der Mikrokapillarplatte durchsetzt und elektrisch geladene Teilchen zumindest teilweise durch die Kapillaren zu der Ausleseeinrichtung driften, wobei vorzugsweise die Durchgangsöffnungen in Form der Kapillaren (12) keine leitfähige Beschichtung aufweisen.

5. Detektor nach Anspruch 3,
**dadurch gekennzeichnet,**
**dass** der Detektor ein einziges Konverterelement in Form der Mikrokapillarplatte (10) aus Borosilikat-Glas aufweist, das mit Bor-10 angereichert ist.

6. Detektor nach Anspruch 3,
**dadurch gekennzeichnet,**
**dass** das zumindest eine Konverterelement in Form der Mikrokapillarplatte (10) in einem geschlossenen, mit Gas gefüllten Volumen bei etwa 1atm (≈0,1 MPa) angeordnet ist.

7. Detektor nach zumindest einem der vorgehenden Ansprüche,
**dadurch gekennzeichnet,**
**dass** das Borsilikat-Glas enthält in Gew.-%:
| | | |
|---|---|---|
| 70 -80% | SiO₂, | vorzugsweise 74,4%, |
| 7-13% | ¹⁰B₂O₃, | vorzugsweise 9,5%, |
| 0,5-8% | Al₂O₃, | vorzugsweise 5,5%, |
| 0,5-12% | Na₂O, | vorzugsweise 6,6%, |
| 0,3-10% | K₂O, | vorzugsweise 0,6%, |
| 0,5-2% | CaO, | vorzugsweise 0,9%, |
| 1-4% | BaO, | vorzugsweise 2,2%, |
oder dass das Borsilikat-Glas besteht aus in Gew.-%:
| | |
|---|---|
| SiO₂ | 55,5% |
| ¹⁰B₂O₃ | 12,5% |
| Al₂O₃ | 0,5% |
| Na₂O | 1,5% |
| K₂O | 10% |
| CaO | 5% |
| V₂O₅ | 0,5% |
| Fe₂O₃ | 12% |
| TiO₂ | 2,5% |

8. Detektor nach Anspruch 3,
**dadurch gekennzeichnet,**
**dass** die Ausleseeinrichtung als eine Delay-Line-, eine Multipad- oder eine "Wedge and Strip"-Struktur ausgebildet ist, die kapazitiv durch eine Rückwand an die Mikrokapillarplatte (10) gekoppelt ist, wobei die Ausleseeinrichtung vorzugsweise einen Phosphorschirm aufweist.

9. Detektor nach Anspruch 3,
**dadurch gekennzeichnet,**
**dass** die Ausleseeinrichtung hinter der Mikrokapillarplatte (10) mit einer resistiven Schicht aus vorzugsweise Germanium oder Kohlenstoff versehen ist.

10. Detektor nach zumindest einem der vorhergehenden Ansprüche,
**dadurch gekennzeichnet,**
**dass** das Gas eine Mischung von Argon mit einer oder mehreren der Komponenten CO₂ (10-90% Anteil), Dimethylether, Isobutan und CH₄ ist.

11. Detektor nach zumindest einem der vorhergehenden Ansprüche,
**dadurch gekennzeichnet,**
**dass** der B₂O₃-Anteil des Borsilikat-Glases bei der Fertigung des Glases in der Schmelze durch angereichertes ¹⁰B₂O₃ ersetzt ist.

12. Verwendung eines Konverterelements für einen mit Gas befüllten Detektor zum Nachweis von Neutronen, aus einem Bor-10 enthaltenden und Durchgänge aufweisenden Material, wobei
das Konverterelement in Form einer Platte (10) aus Borosilikat-Glas ausgebildet ist, das mit Bor-10 angereichert ist.

13. Verwendung nach Anspruch 12,
**dadurch gekennzeichnet,**
**dass** die Platte (10) eine Dicke D im Bereich 500µm < D < 20mm aufweist und/oder dass die Platte eine Mikrokapillarplatte ist, mit Mustern aus Millionen durchgehender Kapillaren (12) mit einem Durchmesser zwischen 30 µm und 800 µm, vorzugsweise von < 150µm.

14. Verwendung nach Anspruch 13,
**dadurch gekennzeichnet,**
**dass** eine Oberseite (16) und eine Unterseite (18) der Mikrokapillarplatte (10) jeweils eine Metallisierung (20, 22) aufweisen, an die zumindest eine Driftfelderzeugungseinrichtung in Form einer Hochspannung angeschlossen ist, mittels der ein elektrisches Driftfeld derart erzeugbar ist, dass dieses die Durchgangsöffnungen in Form der Kapillaren (12) der Mikrokapillarplatte durchsetzt und elektrisch geladene Teilchen zumindest teilweise durch die Kapillaren zu der Ausleseeinrichtung driften, wobei vorzugsweise die Durchgangsöffnungen in Form der Kapillaren (12) keine leitfähige Beschichtung aufweisen.

15. Verwendung nach Anspruch 12 oder Anspruch 13,
dass das Borsilikat-Glas enthält in Gew.-%:
| | | |
|---|---|---|
| 70 -80% | SiO₂, | vorzugsweise 74,4%, |
| 7-13% | ¹⁰B₂O₃, | vorzugsweise 9,5%, |
| 0,5-8% | Al₂O₃, | vorzugsweise 5,5%, |
| 0,5-12% | NazO, | vorzugsweise 6,6%, |
| 0,3-10% | K₂O, | vorzugsweise 0,6%, |
| 0,5-2% | CaO, | vorzugsweise 0,9%, |
| 1-4% | BaO, | vorzugsweise 2,2%, |
oder dass das Borsilikat-Glas besteht aus in Gew.-%:
| | |
|---|---|
| SiO₂ | 55,5% |
| ¹⁰B₂O₃ | 12,5% |
| Al₂O₃ | 0,5% |
| Na₂O | 1,5% |
| K₂O | 10% |
| CaO | 5% |
| V₂O₅ | 0,5% |
| Fe₂O₃ | 12% |
| TiO₂ | 2,5% |

16. Verfahren zum Nachweis von Neutronen, umfassend die Verfahrensschritte:
- Auffangen der zu detektierenden Neutronen mit zumindest einem Konverterelement (10), welches bei Absorption der Neutronen Konvertierungsprodukte, wie Ionen, erzeugt;
- Erzeugung von Elektronen in einem Gas durch die Konvertierungsprodukte;
- Ableiten der Elektronen in einem elektrischen Driftfeld zu einer Ausleseeinrichtung, wobei die Elektronen zumindest teilweise durch das Konverterelement durchgeleitet werden, insbesondere durch eine Vielzahl vorzugsweise matrixartig angeordneter Durchgänge des Konverterelementes;
- Nachweis der Elektronen in einer Ausleseeinrichtung,
**dadurch gekennzeichnet,**
**dass** als Konverterelement eine Platte (10) aus Borosilikat-Glas verwendet wird, das mit Bor-10 angereichert ist, wobei die zu detektierenden Neutronen eine Kernreaktion in dem Glas auslösen und wobei die entstehenden Konvertierungsprodukte in den als Kapillaren (12) ausgebildeten Durchgängen Gasentladungen triggern.

## Claims

1. A detector (26) for detecting neutrons comprising:
- a housing (28) filled at least in part with a gas,
- at least one converter element (10) arranged in the housing, containing boron-10 and having passages, which converter element (10) generates conversion products, such as ions, due to absorption of the neutrons to be detected, wherein the conversion products generate electrons in the gas,
- at least one readout device for detecting the electrons,
**characterised in that**
the detector has the at least one converter element in the form of a plate (10) of borosilicate glass enriched with boron-10.

2. A detector according to Claim 1,
**characterised in that**
the boron-10 enrichment in the boron oxide of the borosilicate glass is greater than 50%, preferably greater than 75% and particularly preferably greater than 90%.

3. A detector according to Claim 1 or 2,
**characterised in that**
the plate (10) has a thickness D in the range 500 µm < D < 20 mm and/or **in that** the plate is a microcapillary plate with patterns of millions of through-capillaries (12) with a diameter between 30 µm and 800 µm, preferably of < 150 µm.

4. A detector according to Claim 3,
**characterised in that**
an upper side (16) and an underside (18) of the microcapillary plate (10) each have a metallisation (20, 22) to which at least one drift field generating device in the form of a high voltage is connected, by way of which an electrical drift field can be generated in such a way that said drift field penetrates the passage openings in the form of the capillaries (12) of the microcapillary plate and electrically charged particles drift at least in part through the capillaries to the readout device, wherein the passage openings in the form of the capillaries (12) preferably do not have a conductive coating.

5. A detector according to Claim 3,
**characterised in that**
the detector has a single converter element in the form of the microcapillary plate (10) of borosilicate glass enriched with boron-10.

6. A detector according to Claim 3,
**characterised in that**
the at least one converter element in the form of the microcapillary plate (10) is arranged in a closed volume filled with gas at approx. 1 atm (≈0.1 MPa).

7. A detector according to at least one of the preceding claims,
**characterised in that**
the borosilicate glass contains in wt.%:
| | | |
|---|---|---|
| 70-80% | SiO₂, | preferably 74.4%, |
| 7-13% | ¹⁰B₂O₃, | preferably 9.5%, |
| 0.5-8% | Al₂O₃, | preferably 5.5%, |
| 0.5-12% | Na₂O, | preferably 6.6%, |
| 0.3-10% | K₂O, | preferably 0.6%, |
| 0.5-2% | CaO, | preferably 0.9%, |
| 1-4% | BaO, | preferably 2.2%, |
or **in that** the borosilicate glass consists in wt.% of:
| | |
|---|---|
| SiO₂ | 55.5% |
| ¹⁰B₂O₃ | 12.5% |
| Al₂O₃ | 0.5% |
| Na₂O | 1.5% |
| K₂O | 10% |
| CaO | 5% |
| V₂O₅ | 0.5% |
| Fe₂O₃ | 12% |
| TiO₂ | 2.5% |

8. A detector according to Claim 3,
**characterised in that**
the readout device is embodied as a delay line, a multipad or a "wedge and strip" structure that is capacitively coupled to the microcapillary plate (10) by a rear wall, wherein the readout device preferably has a phosphor screen.

9. A detector according to Claim 3,
**characterised in that**
the readout device behind the microcapillary plate (10) is provided with a resistive layer of preferably germanium or carbon.

10. A detector according to at least one of the preceding claims,
**characterised in that**
the gas is a mixture of argon with one or more of the components CO₂ (10-90% proportion), dimethyl ether, isobutane and CH₄.

11. A detector according to at least one of the preceding claims,
**characterised in that**
the B₂O₃ content of the borosilicate glass is replaced by enriched ¹⁰B₂O₃ during the production of the glass in the melt.

12. Use of a converter element for a gas-filled detector for detecting neutrons made from a material containing boron-10 and having passages, wherein
the converter element is embodied as a plate (10) of borosilicate glass enriched with boron-10.

13. Use according to Claim 12,
**characterised in that**
the plate (10) has a thickness D in the range 500 µm < D < 20 mm and/or **in that** the plate is a microcapillary plate with patterns of millions of through-capillaries (12) with a diameter between 30 µm and 800 µm, preferably of < 150 µm.

14. Use according to Claim 13,
**characterised in that**
an upper side (16) and an underside (18) of the microcapillary plate (10) each have a metallisation (20, 22) to which at least one drift field generating device in the form of a high voltage is connected, by way of which an electrical drift field can be generated in such a way that said drift field penetrates the passage openings in the form of the capillaries (12) of the microcapillary plate and electrically charged particles drift at least in part through the capillaries to the readout device, wherein the passage openings in the form of the capillaries (12) preferably do not have a conductive coating.

15. Use according to Claim 12 or Claim 13,
the borosilicate glass contains in wt.%:
| | | |
|---|---|---|
| 70-80% | SiO₂, | preferably 74.4%, |
| 7-13% | ¹⁰B₂O₃, | preferably 9.5%, |
| 0.5-8% | Al₂O₃, | preferably 5.5%, |
| 0.5-12% | Na₂O, | preferably 6.6%, |
| 0.3-10% | K₂O, | preferably 0.6%, |
| 0.5-2% | CaO, | preferably 0.9%, |
| 1-4% | BaO, | preferably 2.2%, |
or in that the borosilicate glass consists in wt.% of:
| | |
|---|---|
| SiO₂ | 55.5% |
| ¹⁰B₂O₃ | 12.5% |
| Al₂O₃ | 0.5% |
| Na₂O | 1.5% |
| K₂O | 10% |
| CaO | 5% |
| V₂O₅ | 0.5% |
| Fe₂O₃ | 12% |
| TiO₂ | 2.5% |

16. A method for detecting neutrons comprising the method steps of
- capture of the neutrons to be detected with at least one converter element (10) that generates conversion products, such as ions, on absorption of the neutrons;
- generation of electrons in a gas by the conversion products;
- diversion of the electrons in an electrical drift field to a readout device, wherein the electrons are at least in part guided through the converter element, in particular through a plurality of passages in the converter element that are preferably in a matrix-like arrangement;
- detection of the electrons in a readout device,
**characterised in that**
the converter element used is a plate (10) of borosilicate glass enriched with boron-10, wherein the neutrons to be detected initiate a nuclear reaction in the glass and wherein the resulting conversion products trigger gas discharges in the passages embodied as capillaries (12).

## Revendications

1. Détecteur (26) pour détecter des neutrons, comprenant :
- un boîtier (28) au moins partiellement rempli de gaz,
- au moins un élément convertisseur (10) comprenant du bor-10 disposé dans le boîtier et présentant des passages, lequel crée des produits de conversion tels que des ions, en raison d'une absorption des neutrons à détecter, sachant que les produits de conversion génèrent des électrons dans le gaz,
- au moins un moyen de lecture pour détecter les électrons,
**caractérisé en ce**
**que** le détecteur présente ledit au moins un élément convertisseur sous forme de plaque (10) de verre borosilicate enrichi en bor-10.

2. Détecteur selon la revendication 1,
**caractérisé en ce**
**que** l'enrichissement en bor-10 dans l'oxyde de bore du verre borosilicate est supérieur à 50%, de préférence supérieur à 75 %, en particulier de préférence supérieur à 90 %.

3. Détecteur selon la revendication 1 ou 2,
**caractérisé en ce**
**que** la plaque (10) présente une épaisseur D telle que 500 µm < D < 20 mm et/ou que la plaque est une plaque microcapillaire avec des motifs formés par des millions de capillaires (12) traversants, d'un diamètre compris entre 30 µm et 800 µm, de préférence < 150 µm.

4. Détecteur selon la revendication 3,
**caractérisé en ce**
**qu'**un côté supérieur (16) et un côté inférieur (18) de la plaque microcapillaire (10) présentent respectivement une métallisation (20, 22) sur laquelle est raccordé au moins un dispositif de génération de champs de dérive sous la forme d'une haute tension, au moyen duquel un champ de dérive électrique est générable de telle sorte que celui-ci traverse les orifices de passage sous forme de capillaires (12) de la plaque microcapillaire et que des particules chargées électriquement dérivent au moins partiellement à travers les capillaires vers le moyen de lecture, sachant que, de préférence, les orifices de passage sous forme de capillaires (12) ne présentent aucun revêtement conducteur.

5. Détecteur selon la revendication 3,
**caractérisé en ce**
**que** le détecteur présente un seul élément convertisseur sous forme de plaque microcapillaire (10) de verre borosilicate enrichi en bor-10.

6. Détecteur selon la revendication 3,
**caractérisé en ce**
**que** ledit au moins un élément convertisseur sous la forme de la plaque microcapillaire (10) est disposé dans un volume fermé, rempli de gaz à environ 1 atm (≈0,1 MPa).

7. Détecteur selon au moins une des revendications précédentes,
**caractérisé en ce**
**que** le verre borosilicate contient en % en poids :
| | | |
|---|---|---|
| 70 -80 % de | SiO₂, | de préférence 74,4 %, |
| 7-13 % de | ¹⁰B₂O₃, | de préférence 9,5 %, |
| 0,5-8 % de | Al₂O₃, | de préférence 5,5 %, |
| 0,5-12 % de | Na₂O, | de préférence 6,6 %, |
| 0,3-10 % de | K₂O, | de préférence 0,6 %, |
| 0,5-2 % de | CaO, | de préférence 0,9 %, |
| 1-4 % de | BaO, | de préférence 2,2 %, |
ou que le verre borosilicate se compose des éléments suivants en % en poids :
| | |
|---|---|
| SiO₂ | 55,5 % |
| ¹⁰B₂O₃ | 12,5 % |
| Al₂O₃ | 0,5 % |
| Na₂O | 1,5 % |
| K₂O | 10 % |
| CaO | 5 % |
| V₂O₅ | 0,5 % |
| Fe₂O₃ | 12 % |
| TiO₂ | 2,5 % |

8. Détecteur selon la revendication 3,
**caractérisé en ce**
**que** le moyen de lecture est conçu sous forme de structure Delay Line, Multipad ou « Wedge and Strip » qui est couplée de manière capacitive à la plaque microcapillaire (10) à travers une paroi arrière, sachant que le moyen de lecture présente de préférence un écran fluorescent.

9. Détecteur selon la revendication 3,
**caractérisé en ce**
**que** le moyen de lecture derrière la plaque microcapillaire (10) est pourvu d'une couche résistive de préférence en germanium ou carbone.

10. Détecteur selon au moins l'une des revendications précédentes,
**caractérisé en ce**
**que** le gaz est un mélange d'argon avec un ou plusieurs des composants suivants : CO₂ (part de 10-90 %), diméthyléther, isobutane et CH₄.

11. Détecteur selon au moins l'une des revendications précédentes,
**caractérisé en ce**
**que** lors de la fabrication du verre, la part de B₂O₃ du verre borosilicate est remplacée dans la masse fondue par du ¹⁰B₂O₃ enrichi.

12. Utilisation d'un élément convertisseur pour un détecteur rempli de gaz afin de détecter des neutrons, constitué d'un matériau contenant du bor-10 et présentant des passages, sachant
que l'élément convertisseur est conçu sous forme de plaque (10) de verre borosilicate enrichi en bor-10.

13. Utilisation selon la revendication 12,
**caractérisée en ce**
**que** la plaque (10) présente une épaisseur D telle que 500 µm < D < 20 mm et/ou que la plaque est une plaque microcapillaire avec des motifs formés par des millions de capillaires (12) traversants, d'un diamètre compris entre 30 µm et 800 µm, de préférence < 150 µm.

14. Utilisation selon la revendication 13,
**caractérisée en ce**
**qu'**un côté supérieur (16) et un côté inférieur (18) de la plaque microcapillaire (10) présentent respectivement une métallisation (20, 22) sur laquelle est raccordé au moins un dispositif de génération de champs de dérive sous la forme d'une haute tension, au moyen duquel un champ de dérive électrique est générable de telle sorte que celui-ci traverse les orifices de passage sous forme de capillaires (12) de la plaque microcapillaire et que des particules chargées électriquement dérivent au moins partiellement à travers les capillaires vers le moyen de lecture, sachant que, de préférence, les orifices de passage sous forme de capillaires (12) ne présentent aucun revêtement conducteur.

15. Utilisation selon la revendication 12 ou 13,
telle que le verre borosilicate contient en % en poids :
| | | |
|---|---|---|
| 70 -80 % de | SiO₂, | de préférence 74,4 %, |
| 7-13 % de | ¹⁰B₂O₃, | de préférence 9,5 %, |
| 0,5-8 % de | Al₂O₃, | de préférence 5,5 %, |
| 0,5-12 % de | Na₂O, | de préférence 6,6 %, |
| 0,3-10 % de | K₂O, | de préférence 0,6 %, |
| 0,5-2 % de | CaO, | de préférence 0,9 %, |
| 1-4 % | BaO, | de préférence 2,2 %, |
ou que le verre borosilicate se compose des éléments suivants en % en poids :
| | |
|---|---|
| SiO₂ | 55,5 % |
| ¹⁰B₂O₃ | 12,5 % |
| Al₂O₃ | 0,5 % |
| Na₂O | 1,5 % |
| K₂O | 10 % |
| CaO | 5 % |
| V₂O₅ | 0,5 % |
| Fe₂O₃ | 12 % |
| TiO₂ | 2,5 % |

16. Procédé de détection des neutrons, comprenant les étapes suivantes :
- capture des neutrons à détecter avec au moins un élément convertisseur (10) qui génère des produits de conversion, tels des ions, par absorption des neutrons ;
- génération d'électrons dans un gaz par les produits de conversion ;
- dérive des électrons dans un champ de dérive électrique vers un moyen de lecture, sachant que les électrons sont conduits au moins partiellement à travers l'élément convertisseur, notamment à travers une multitude de passages de l'élément convertisseur, disposés de préférence sous forme de matrice ;
- Détection des électrons dans un moyen de lecture,
**caractérisé en ce**
**qu'**est utilisée comme élément convertisseur une plaque (10) de verre borosilicate qui est enrichie de bor-10, sachant que les neutrons à détecter déclenchent une réaction nucléaire dans le verre et sachant que les produits de conversion formés déclenchent des décharges gazeuses dans les passages formés sous forme de capillaires (12).
